# EUROPÄISCHE PATENTANMELDUNG

(11) **EP 1 775 095 A1**
(43) Veröffentlichungstag der Anmeldung: **18.04.2007**
(21) Anmeldenummer: 06021241.2
(22) Anmeldetag: 10.10.2006
(51) Int. Cl.: B29C 45/17, B29C 45/42

(54) **Spritzgußmaschine zur Herstellung von Kunststoff-Formteilen, vorzugsweise von Kunststoffbechern**

(30) Priorität: 14.10.2005 DE 102005050027
(71) Anmelder: SysTec Komplettsysteme GmbH, 72574 Bad Urach (DE)
(72) Erfinder: Döbler, Walter, 72574 Bad Urach-Seeburg (DE)
(74) Vertreter: Jackisch-Kohl, Anna-Katharina

(57) **Zusammenfassung**

Die Spritzgußmaschine zur Herstellung von Kunststoff-Formteilen (24) hat eine Spritzgußform (4) und eine Entnahmeeinheit (25), mit der die Kunststoff-Formteile (24) der Spritzgußform (4) entnehmbar sind. Um die Spritzgußmaschine so auszubilden, daß die in der Spritzgußform (4) hergestellten Kunststoff-Formteile (24) zuverlässig mittels der Entnahmeeinheit (25) gehandhabt werden können, werden die Kunststoff-Formteile (24) bei geschlossener Spritzgußform (4) geführt abgelegt. Dieser Ablegevorgang erfolgt, wenn die Spritzgußform (4) wieder geschlossen ist und das nächste Kunststoff-Formteil (24) gespritzt wird. Die Spritzgußmaschine eignet sich zum Spritzen von Kunststoffbechern (24), die mit einem Etikett (12) versehen sind, das mit dem Kunststoff fest verbunden ist.

## Beschreibung

Die Erfindung betrifft eine Spritzgußmaschine zur Herstellung von Kunststoff-Formteilen, vorzugsweise von Kunststoffbechern, nach dem Oberbegriff des Anspruches 1.

Es ist bei der Herstellung von Kunststoffbechern bekannt, nach dem Öffnen der Spritzgußform die Kunststoffbecher mittels der Entnahmeeinheit zu entnehmen und dann abzublasen, so daß die Kunststoffbecher von der Entnahmeeinheit nach unten in Stapeleinheiten fallen. Dabei können die Kunststoffbecher beschädigt werden, insbesondere wenn sie dünnwandig sind. Da die Kunststoffbecher sehr leicht sind, bereitet das Handling erhebliche Probleme, so daß eine sichere Produktion nicht gewährleistet ist.

Der Erfindung liegt die Aufgabe zugrunde, die gattungsgemäße Spritzgußmaschine so auszubilden, daß die in der Spritzgußform hergestellten Kunststoff-Formteile zuverlässig mittels der Entnahmeeinheit gehandhabt werden können.

Diese Aufgabe wird bei der gattungsgemäßen Spritzgußmaschine erfindungsgemäß mit den kennzeichnenden Merkmalen des Anspruches 1 gelöst.

Bei der erfindungsgemäßen Spritzgußmaschine werden die in der Spritzgußform hergestellten Kunststoff-Formteile mit der Entnahmeeinheit entnommen und geführt abgelegt. Dieser Ablegevorgang erfolgt, wenn die Spritzgußform wieder geschlossen ist und das nächste Kunststoff-Formteil gespritzt wird. Zum einen wird somit eine saubere Ablage der Kunststoff-Formteile gewährleistet, zum anderen wird durch diesen Ablegevorgang die Zeit zur Entnahme der Kunststoff-Formteile nicht beeinträchtigt. Der Ablegevorgang ist wesentlich kürzer als die Zeit zum Spritzgießen des nächsten Kunststoff-Formteiles. Dadurch ist sichergestellt, daß beim Öffnen der Spritzgußform die Entnahmeeinheit bereits wieder ihre zur Entnahme des Kunststoff-Formteiles notwendige Lage einnimmt.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: teilweise in Draufsicht und teilweise im Schnitt eine erfindungsgemäße Spritzgußmaschine zur Herstellung von Kunststoffbechern,
- Fig. 2: eine Draufsicht auf eine Übergabeeinheit für Etiketten der erfindungsgemäßen Spritzgußmaschine,
- Fig. 3: eine Etagen-Spritzgußform einer zweiten Ausführungsform einer erfindungsgemäßen Spritzgußmaschine in geschlossener Stellung,
- Fig. 4: eine Seitenansicht der Spritzgußform gemäß Fig. 3,
- Fig. 5: in einer Darstellung entsprechend Fig. 3 die geöffnete Spritzgußform,
- Fig. 6: eine Draufsicht auf einen Teil der zweiten Ausführungsform der erfindungsgemäßen Spritzgußmaschine,
- Fig. 7: in schematischer Darstellung den Bewegungsablauf einer Entnahme- und einer Eingabeeinheit der erfindungsgemäßen Spritzgußmaschine gemäß den Fig. 1 und 2,
- Fig. 8: in schematischer Darstellung die Entnahme eines gespritzten Kunststoffbechers aus der geöffneten Spritzgußform sowie das Einsetzen eines Etikettes für den nächsten Spritzvorgang,
- Fig. 9: in vergrößerter und schematischer Darstellung die Eingabe- und die Entnahmeeinheit der erfindungsgemäßen Spritzgußmaschine,
- Fig. 10: eine zweite Ausführungsform einer Entnahme- und Eingabeeinheit der erfindungsgemäßen Spritzgußmaschine.

Mit der Spritzgußmaschine werden Kunststoffbecher gespritzt, die mit wenigstens einem Etikett versehen sind, das mit dem Kunststoff fest verbunden ist. Die Etiketten befinden sich in mindestens einem Magazin 1 der Spritzgußmaschine, in dem sie hintereinander und/oder übereinander angeordnet sind. Sie werden mit mindestens einer Übergabeeinheit 2 dem Magazin 1 entnommen und einer Eingabeeinheit 3 übergeben, mit der die Etiketten in eine Spritzgußform 4 eingelegt werden. Um eine hohe Leistung der Spritzgußmaschine zu erreichen, sind mehrere Magazine 1 und dementsprechend mehrere Übergabeeinheiten 2, Eingabeeinheiten 3 und eine Spritzgußform 4 mit mehreren Kavitäten vorgesehen. Mit einer solchen Spritzgußmaschine können nicht nur Kunststoffbecher, sondern auch andere Kunststoff-Formteile, wie z.B. Deckel, Tuben und dgl., hergestellt werden. Die Etiketten sind vorzugsweise bedruckt und können aus Kunststoffolien, Metallfolien, Mehrschichtfolien und dgl. bestehen.

Die Magazine 1 sind vorteilhaft geneigt angeordnet, so daß die darin befindlichen Etiketten sicher nachrutschen und von den Übergabeeinheiten 2 übernommen werden können. Solche Etikettenmagazine 1 sind bekannt und werden darum auch nicht näher erläutert.

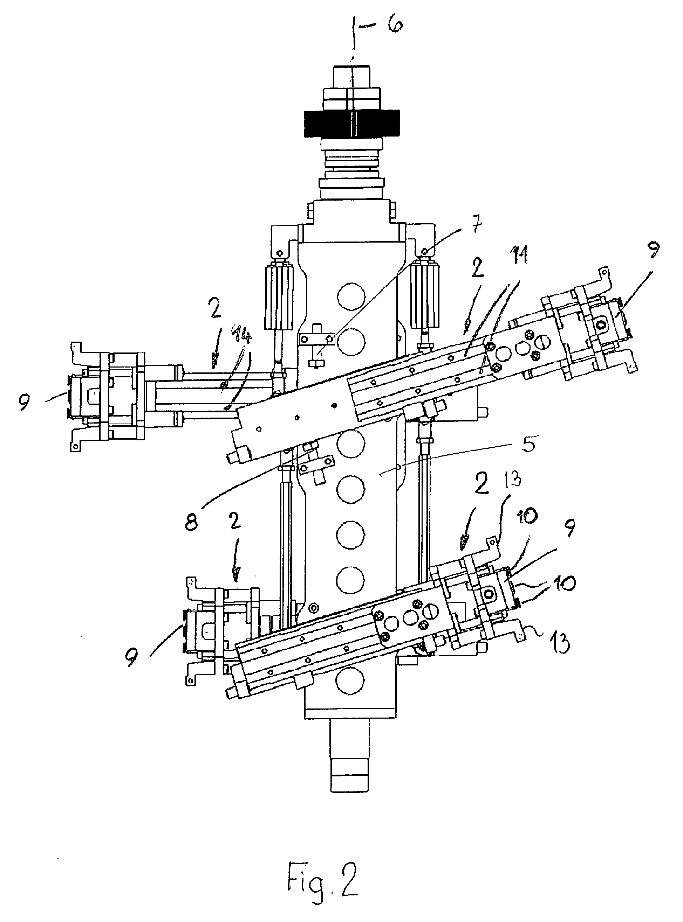

Die Übergabeeinheiten 2 sind an einem vertikalen Ständer 5 (Fig. 2) vorgesehen, der um eine vertikale Achse 6 in der Spritzgußmaschine drehbar gelagert ist. Die Übergabeeinheiten 2 sind um eine horizontale Achse begrenzt schwenkbar am Ständer 5 angeordnet. Fig. 2 zeigt zwei Übergabeeinheiten 2 in einer geneigten und zwei weitere Übergabeeinheiten 2 in einer horizontalen Stellung. Beide Stellungen werden durch Anschläge 7, 8 festgelegt, die am Ständer 5 vorgesehen sind und im Ausführungsbeispiel durch Stellschrauben gebildet werden. Die Übergabeeinheiten 2 liegen in der jeweiligen Endstellung an den Schraubenköpfen an. Mit den Stellschrauben läßt sich die Lage der Übergabeeinheiten 2 einfach und genau einstellen. Die Übergabeeinheiten 2 sind gleich ausgebildet und haben jeweils ein Aufnahmeteil 9 in Form eines Saughalters, mit dem das Etikett 12 dem Magazin 1 entnommen wird. Die Aufnahmeteile 9 sind an ihrer Stirnseite mit Saugöffnungen 10 versehen, über die zum Abnehmen des jeweiligen Etikettes aus dem Magazin 1 Unterdruck erzeugt werden kann. Das jeweilige Etikett bleibt dann an der Stirnseite des Aufnahmeteiles 9 hängen und kann in noch zu beschreibender Weise an die Eingabeeinheit 3 übergeben werden. Die Aufnahmeteile 9 sind in Achsrichtung der Übergabeeinheit 2 verschiebbar.

Am Ständer 5 sind auf einander gegenüberliegenden Seiten jeweils zwei mit Abstand übereinander angeordnete Übergabeeinheiten 2 vorgesehen. In Fig. 2 befindet sich der Aufnahmeteil 9 der jeweils oberen Übergabeeinheit 2 in der ausgezogenen Lage, während die Aufnahmeteile 9 der unteren Übergabeeinheiten 2 zurückgezogen sind. Da die Magazine 1 geneigt angeordnet sind, werden die Übergabeeinheiten 2 in die in Fig. 2 dargestellte Neigungslage verstellt, in der zumindest die Achse der Aufnahmeteile 9 in Verlängerung der Achse der Magazine 1 liegt. Zur Aufnahme der Etiketten 12 werden die Aufnahmeteile 9 ausgefahren, so daß sie aus den Magazinen 1 das jeweils vorderste Etikett durch Erzeugen von Unterdruck aufnehmen können.

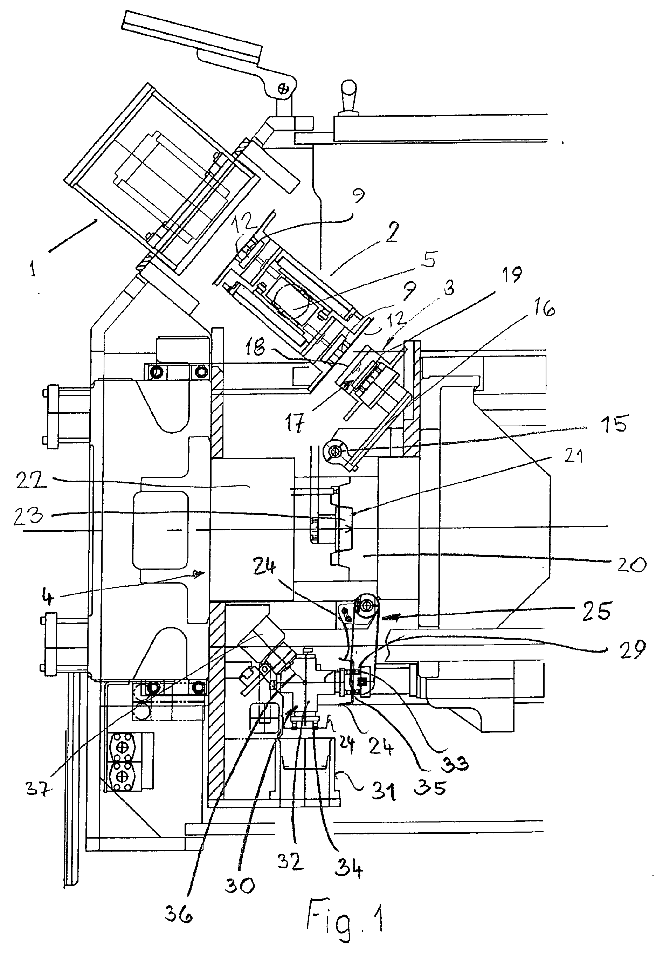

Anschließend wird der Ständer 5 um die vertikale Achse 6 so gedreht, daß die Aufnahmeteile 9 mit den Etiketten 12 den Eingabeeinheiten 3 gegenüberliegen. Während der Drehung des Ständers 5 werden die zwei Übergabeeinheiten 2 um die horizontale Achse so weit geschwenkt, bis sie, definiert durch die Anschläge 7, die horizontale Lage einnehmen und dann die Etiketten 12 sicher den Eingabeeinheiten 3 übergeben können. Die auf der jeweils anderen Seite des Ständers 5 befindlichen Übergabeeinheiten 2 werden während der Drehbewegung des Ständers 5 aus der horizontalen Lage in die geneigte Lage geschwenkt, die durch die Anschläge 8 bestimmt wird. Während die einen Übergabeeinheiten 2 ihre Etiketten 12 an die Eingabeeinheiten 3 übergeben, übernehmen die beiden anderen Übergabeeinheiten 2 die nächsten Etiketten den Magazinen 1. Je nach Lage der Magazine 1 und der Eingabeeinheiten 3 in der Spritzgußmaschine kann es notwendig sein, die Aufnahmeteile 9 während der Drehbewegung des Ständers 5 ein- und auszufahren. In Fig. 1 sind beispielhaft die Etiketten 12 dargestellt, die an den Aufnahmeteilen 9 der Übergabeeinheiten 2 durch Saugkraft gehalten sind. Die Etiketten 12 sind eben und werden zuverlässig an den Aufnahmeteilen 9 abgestützt. Wie Fig. 2 zeigt, haben die Aufnahmeteile 9 seitlich neben den Saugöffnungen 10 ebene Anlageflächen 13 für die Etiketten 12. Je nach Gestaltung der Etiketten 12 ist es möglich, an den Übergabeeinheiten 2 entsprechend gestaltete Aufnahmeteile 9 vorzusehen, die zu diesem Zweck vorteilhaft leicht auswechselbar an den Übergabeeinheiten 2 angeordnet sind. Die Aufnahmeteile 9 sitzen vorteilhaft auf Stangen 14, die in den Übergabeeinheiten 2 geführt und zum Verschieben vorteilhaft pneumatisch beaufschlagt werden.

Die Eingabeeinheiten 3 sitzen auf einer vertikalen Achse 15 (Fig. 1), die drehbar in der Spritzgußmaschine gelagert ist und auf der die Eingabeeinheiten 3 mit Abstand übereinander angeordnet sind. Im Ausführungsbeispiel sitzen auf der Schwenkachse 15 zwei Eingabeeinheiten 3 mit Abstand übereinander. Die Eingabeeinheiten 3 sind vorteilhaft gleich ausgebildet und haben einen quer von der Achse 15 abstehenden Arm 16, der am freien Ende einen Aufnahmekopf 17 für das Etikett 12 aufweist. Der Aufnahmekopf 17 ist im Ausführungsbeispiel quaderförmig ausgebildet und hat (nicht dargestellte) Schlitze, über die eine Saugkraft auf das Etikett 12 ausgeübt wird. Es wird dann selbsttätig auf den Aufnahmekopf 17 in Becherform gewickelt. Der Aufnahmekopf 17 hat eine Stirnseite 18 sowie Seitenwände 19, an denen das Etikett 12 unter dem Saugdruck flächig anliegt.

Zur Übernahme der Etiketten 12 von den Übergabeeinheiten 2 befindet sich die Eingabeeinheit 3 in der in Fig. 1 dargestellten Übergabestellung. Die die Etiketten 12 durch Unterdruck haltenden Aufnahmeteile 9 werden nach dem Drehen des Ständers 5 in die Übergabestellung gemäß Fig. 1 so weit ausgefahren, daß die Etiketten 12 zunächst an der Stirnseite 18 der Aufnahmeköpfe 17 anliegen oder geringen Abstand von ihr haben. Dann wird das Etikett vom Aufnahmeteil 9 der Übergabeeinheiten 2 abgeblasen und kurz zuvor der Unterdruck an die Aufnahmeköpfe 17 der Eingabeeinheiten 3 angelegt. Auf diese Weise ist eine sichere Übergabe der Etiketten 12 von den Übergabeeinheiten 2 an die Eingabeeinheiten 3 gewährleistet. Unmittelbar nach Übergabe der Etiketten 12 werden die Aufnahmeteile 9 der Übergabeeinheiten 2 zurückgefahren. Gleichzeitig werden auch die anderen Übergabeeinheiten 2, die das Etikett 12 dem jeweiligen Magazin 1 entnommen haben, zurückgefahren. Beim Drehen des Ständers 5 um die Vertikalachse 6 befinden sich somit sämtliche Aufnahmeteile 9 in der eingefahrenen Stellung. Sobald die Aufnahmeteile 9 wieder den Magazinen 1 bzw. den Eingabeeinheiten 3 gegenüberliegen, werden sie ausgefahren. Während an der einen Seite die Etiketten 12 an die Eingabeeinheiten 3 übergeben werden, werden an der gegenüberliegenden Seite die Etiketten 12 den Magazinen 1 entnommen.

Im Ausführungsbeispiel liegen die Magazine 1 und die Eingabeeinheiten 3 einander gegenüber, so daß der Ständer 5 jeweils um 180° gedreht wird. Je nach Aufbau der Spritzgußmaschine können die Magazine 1 und die Eingabeeinheiten 3 auch andere Stellungen zueinander einnehmen, so daß der Ständer 5 dementsprechend um unterschiedliche Winkel dreht.

Die Achse 15 der Eingabeeinheiten 3 ist fest mit dem verfahrbaren Werkzeugteil 20 der Spritzgußform 4 verbunden, so daß die Achse 15 beim Öffnen und Schließen der Spritzgußform 4 jeweils mit dem Werkzeugteil 20 mitfährt. Der Werkzeugteil 20 ist in der Spritzgußmaschine horizontal verschiebbar und mit einer Formmatrize 21 versehen, in die in noch zu beschreibender Weise vom Aufnahmekopf 17 das Etikett 12 eingelegt wird. Dem Werkzeugteil 20 gegenüber liegt das Werkzeugteil 22 mit einer Formpatrize 23. Die Formmatrize 21 und die Formpatrize 23 bilden zusammen die Form für die Herstellung der Kunststoffbecher. Das Werkzeugteil 22 ist maschinenfest angeordnet, während zum Öffnen und Schließen der Spritzgußform 4 das Werkzeugteil 20 bewegt wird.

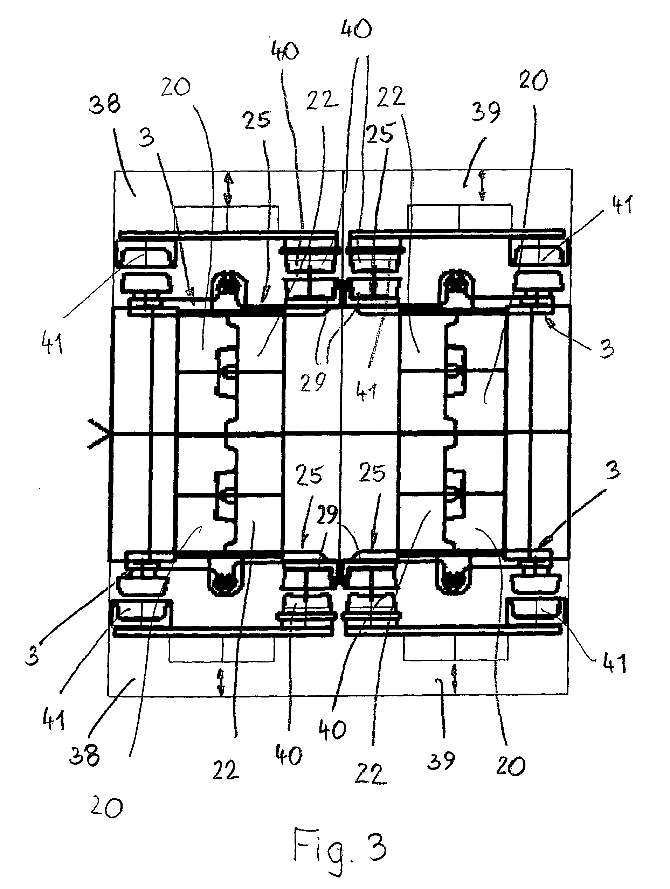

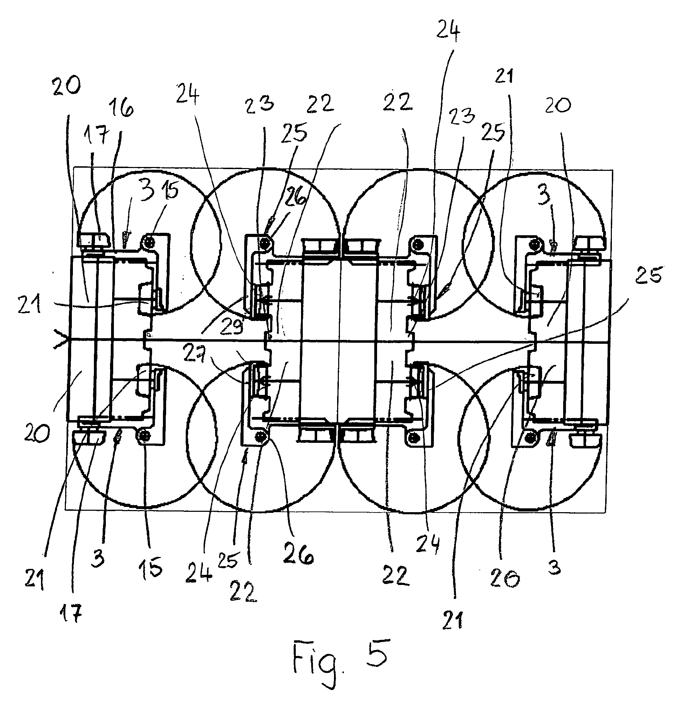

Fig. 3 zeigt eine Spritzgußform 4 einer zweiten Ausführungsform einer Spritzgußmaschine. Die Spritzgußform 4 ist als Etagenwerkzeug ausgebildet, bei dem mehrere Werkzeugteile 20, 22 vorgesehen sind. Im Ausführungsbeispiel sind jeweils vier Werkzeugteile 20, 22 vorgesehen, so daß in der Spritzgußmaschine vier Kunststoffbecher gleichzeitig gespritzt werden können. Die vier Spritzgußformen gemäß Fig. 3 sind über- und nebeneinander angeordnet. Entsprechend der Zahl der Spritzgußformen ist auch eine entsprechende Zahl von Eingabeeinheiten 3 und Übergabeeinheiten 2 an der Spritzgußmaschine vorhanden. Wie die Fig. 3 und 5 zeigen, sind die nebeneinander liegenden Werkzeugteile 20 und 22 einstückig miteinander ausgebildet, so daß beim Öffnen der Spritzgußformen (Fig. 5) jeweils zwei gespritzte Kunststoffbecher gleichzeitig entnommen werden können. Wie Fig. 5 zeigt, ist an den einander gegenüberliegenden Seiten des Werkzeugteiles 20 jeweils eine Drehachse 15 vorgesehen, auf der jeweils zwei übereinander liegende Eingabeeinheiten 3 drehfest gelagert sind. Mit ihnen können die Etiketten 12 bei geöffneter Spritzgußform in die Formmatrizen 21 der Werkzeugteile 20 eingelegt werden. Die Aufnahmeköpfe 17 sind an die Form der Formmatrizen 21 angepaßt. Fig. 5 zeigt beispielhaft für die Eingabeeinheiten 3 die Übergabestellung außerhalb der Spritzgußform und die Einlegestellung, in der die Eingabeeinheiten 3 das Etikett 12 mittels des Aufnahmekopfes 17 in die Formmatrizen 21 einlegen. In den Formmatrizen 21 wird das jeweilige Etikett 12 in bekannter Weise so lange gehalten, bis die Spritzgußform 4 wieder geschlossen wird. Sobald der Aufnahmekopf 17 der jeweiligen Eingabeeinheit 3 in die Formmatrize 21 eingetaucht ist, wird die Unterdruckquelle abgeschaltet bzw. das gewickelte Etikett 12 abgeblasen, das in die Formmatrize 21 gelangt. Anschließend kann die jeweilige Spritzgußform 4 geschlossen und der Kunststoff an das Etikett angespritzt werden. Werden die Spritzgußformen 4 wieder geöffnet, sitzt der gespritzte Kunststoffbecher 24 auf der jeweiligen Formpatrize 23. Hier kann er mit einer Entnahmeeinheit 25 in noch zu beschreibender Weise abgenommen werden.

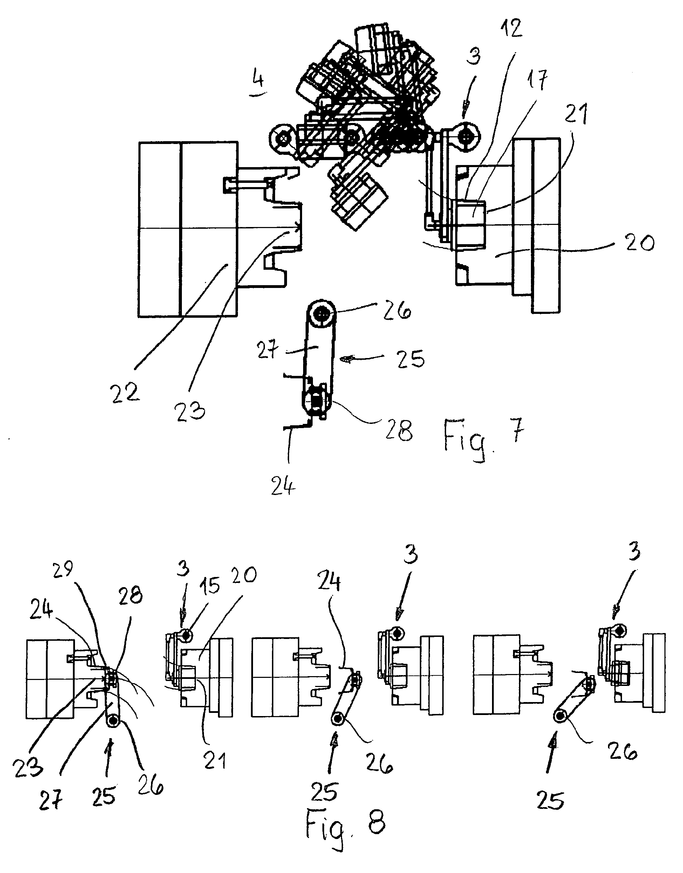

Bei der Ausführungsform nach den Fig. 1, 2, 7 und 8 ist die Entnahmeeinheit 25 um eine vertikale maschinenfeste Achse 26 drehbar. Je nach Zahl der Spritzgußformen 4 bzw. der in ihnen hergestellten Kunststoffbecher 24 sind auf der Achse 26 übereinander mehrere Entnahmeeinheiten 25 angeordnet. Am oberen und unteren Ende der Drehachse 26 sitzt jeweils ein radial abstehender Arm 27, der am freien Ende eine parallel zur Drehachse 26 liegende Achse 28 trägt. Auf ihr sitzen drehfest Saughalter 29, mit denen die auf den Formmatrizen 23 sitzenden, gespritzten Kunststoffbecher 24 abgenommen werden können. An den Armen 27 ist ein (nicht dargestellter) Drehantrieb für die parallel zur Achse 26 liegende Drehachse 28 untergebracht. Mit ihm wird die Achse 28 beim Drehen der Achse 26 relativ zu dieser Achse so gedreht, daß der Kunststoffbecher 24 und damit der Saughalter 29 translatorisch bewegt wird (Fig. 8).

Die Eingabeeinheiten 3 und die Entnahmeeinheiten 25 liegen an einander gegenüberliegenden Seiten der Spritzgußform 4, wobei die Entnahmeeinheiten 25 maschinenfest angeordnet sind, während die Eingabeeinheiten 3 zusammen mit dem verschiebbaren Werkzeugteil 20 beim Öffnen und Schließen der Spritzgußform mitgenommen werden.

Wie sich aus Fig. 8 ergibt, werden mit den Entnahmeeinheiten 25 die auf den Formpatrizen 23 sitzenden Kunststoffbecher 24 entnommen, während gleichzeitig in die Formmatrizen 21 mit den Eingabeeinheiten 3 die Etiketten 12 für den nächsten Spritzgußvorgang eingelegt werden. Die Eingabeeinheiten 3 werden in der beschriebenen Weise für den Einlegevorgang um die Achse 15 gedreht, die parallel zur Drehachse 26 der Entnahmeeinheiten 25 verläuft. Die Drehbewegung der Achsen 15, 26 ist so koordiniert, daß die Eingabeeinheiten 3 und die Entnahmeeinheiten 25 bei geöffneter Spritzgußform nicht miteinander kollidieren. Vorteilhaft sind die Drehbewegungen der Achsen 15, 26 über eine Folgesteuerung so gekoppelt, daß zunächst die Entnahmeeinheiten 25 in die geöffnete Spritzgußform eingeschwenkt und mit den Saughaltern 29 die Kunststoffbecher 24 von den Formpatrizen 23 abgezogen werden. Zeitlich verzögert werden die Eingabeeinheiten 3 aus der Übergabestellung gemäß Fig. 1 in die geöffnete Spritzgußform geschwenkt, um die auf den Aufnahmeköpfen 17 sitzenden Etiketten 12 in die Formmatrizen 21 einzulegen. Anschließend schwenken die Eingabeeinheiten 3 wieder zurück in die Übergabestellung gemäß Fig. 1, um die nächsten Etiketten 12 von den Übergabeeinheiten 2 zu übernehmen.

Die Entnahme der Kunststoffbecher 24 und das Einlegen der Etiketten 12 in die Formmatrizen 21 für den nächsten Spritzgußvorgang erfolgen im wesentlichen zeitgleich. Dadurch kann in der Zeiteinheit eine sehr große Zahl von Kunststoffbechern gespritzt werden. Da die Eingabeeinheiten 3 und die Entnahmeeinheiten 25 zur gleichen Zeit in die geöffnete Spritzgußform 4 eingeschwenkt und sofort anschließend wieder herausgeschwenkt werden, kann die Zeit zwischen aufeinanderfolgenden Spritzgußvorgängen sehr kurz gehalten werden.

Aus Fig. 7 ergibt sich der Bewegungsablauf der Eingabeeinheit 3 vom Zeitpunkt des Öffnens der Spritzgußform bis zum Einlegen des auf dem Aufnahmekopf 17 sitzenden Etiketts 12 in die Formmatrize 21. Aus Fig. 8 wird ersichtlich, wie der Kunststoffbecher 24 mittels der Entnahmeeinheit 25 translatorisch bewegt wird, indem die Achse 28 beim Schwenkvorgang relativ zur Achse 26 drehbar angetrieben wird. Die Endstellung der Entnahmeeinheit 25 zeigt Fig. 7, in der sich der Arm 27 vollständig außerhalb der Spritzgußform 4 befindet.

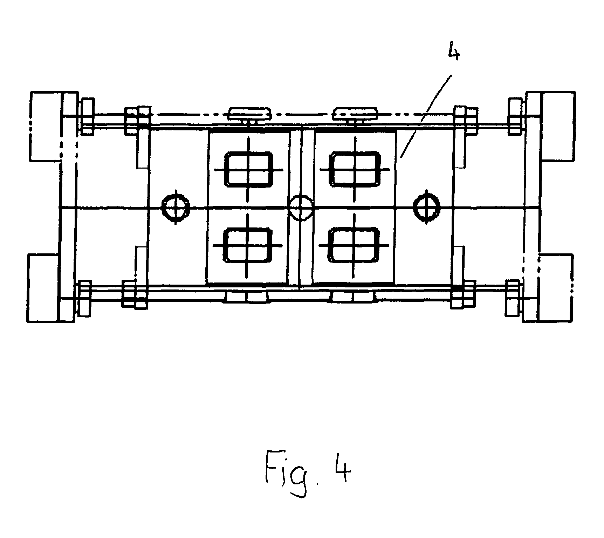

Bei der Ausführungsform nach den Fig. 3 bis 6 schwenken die Eingabeeinheiten 3 um einen wesentlich größeren Winkel als beim Ausführungsbeispiel nach den Fig. 1, 2 und 7. Bei jener Ausführungsform ist der Schwenkwinkel zwischen der Übernahme und der Einlegeposition kleiner als 180°. Bei der Ausführungsform nach den Fig. 3 bis 6 beträgt dieser Schwenkwinkel 270°. In der Übernahmestellung liegen die Arme 16 der Eingabeeinheiten 3 an einer Seite der Werkzeugteile 20. Da beim Ausführungsbeispiel nach den Fig. 3 bis 6 jedes Werkzeugteil 20 zwei Formmatrizen 21 aufweist, ist an den voneinander abgewandten Seiten jedes Werkzeugteiles 20 jeweils eine Eingabeeinheit 3 vorgesehen.

Auch die den Formpatrizen 23 zugeordneten Entnahmeeinheiten 25 sind aus der Ausgangsstellung über 270° in die Entnahmestellung um die Achse 26 drehbar. Im Unterschied zur vorigen Ausführungsform ist am freien Ende der quer abstehenden Arme 27 der Entnahmeeinheiten 25 keine weitere Drehachse vorgesehen. Vielmehr ist am freien Ende der Arme 27 der Saughalter 29 starr befestigt, der den gespritzten Kunststoffbecher von der jeweiligen Formpatrize 23 abnimmt. In Fig. 5 sind die Schwenkwege der Eingabeeinheiten 3 und der Entnahmeeinheiten 25 eingezeichnet. Da die Bewegungswege dieser Einheiten einander teilweise überlappen, erfolgt die Schwenkbewegung der Einheiten 3, 25 gesteuert so, daß sie nicht miteinander kollidieren. Auch bei dieser Ausführungsform werden die gespritzten Kunststoffbecher 24 der geöffneten Spritzgußform entnommen und im wesentlichen zeitgleich die Etiketten für den nächsten Spritzgußvorgang eingelegt. Sobald die Einheiten 3, 25 wieder ihre Ausgangslage einnehmen, wird die Spritzgußform 4 geschlossen und der nächste Spritzgußvorgang eingeleitet.

Die von den Entnahmeeinheiten 25 den Spritzgußformen entnommenen Kunststoffbecher 24 werden Ablegeeinheiten 30 übergeben, mit denen die Kunststoffbecher 24 geführt in einer Aufnahme 31 abgelegt werden. Die Ablegeeinheit 30 hat zwei rechtwinklig zueinander liegende Arme 32, 33, die an ihren freien Enden Saughalter 34, 35 aufweisen. Im Ausführungsbeispiel liegen die Arme 32, 33 in einer Horizontalebene. Die Ablegeeinheit 30 kann um eine unter 45° zwischen den Armen 32, 33 verlaufende und in der Ebene der Arme 32, 33 liegende Achse 36 um 180° geschwenkt werden. Dies hat zur Folge, daß nach der 180°-Schwenkung die Arme 32, 33 ihren Platz getauscht haben.

Die Ablegeeinheit 30 ist in ihrer Ausgangsstellung so angeordnet, daß der Saughalter 35 des Arms 33 dem Saughalter 29 der Entnahmeeinheit 25 gegenüberliegt (Fig. 1). Schwenkt die Entnahmeeinheit 25 in die in Fig. 1 dargestellte Lage, greift der Saughalter 35 in den abgenommenen Aufnahmebecher 24 ein. Er wird vom Saughalter 29 der Entnahmeeinheit 25 abgeblasen und durch Anlegen von Unterdruck am Saughalter 35 der Ablegeeinheit 30 festgehalten. Anschließend wird die Ablegeeinheit 30 um die Achse 36 mittels eines Antriebes 37 geschwenkt, so daß der Kunststoffbecher 24 der Aufnahme 31 gegenüberliegt. Anschließend wird der Saughalter 35 mit dem daran befindlichen Kunststoffbecher 24 ausgefahren und auf diese Weise der Kunststoffbecher 24 in den in der Aufnahme 31 bereits befindlichen Kunststoffbecher 24 gesteckt. Auf diese Weise wird in der Aufnahme 31 ein Stapel von ineinander gesteckten Kunststoffbechern 24 gebildet. Die Saughalter 34, 35 sitzen auf (nicht dargestellten) Stangen, die aus den jeweiligen Armen 32, 33 ausgefahren werden können.

Während der Kunststoffbecher 24 in die Aufnahme 31 gesteckt wird, wird gleichzeitig mit dem Saughalter des anderen Armes von der Entnahmeeinheit 25 der nächste Kunststoffbecher aufgenommen. Auf diese Weise kann durch Hin- und Herschalten der Ablegeeinheit 30 der der Spritzgußform 4 entnommene Kunststoffbecher in die Aufnahme 31 gesteckt werden. Sie liegt horizontal. Sobald in der Aufnahme 31 die entsprechende Stapellänge von Kunststoffbechern 24 gebildet ist, wird der Stapel aus der Aufnahme 31 geschoben und auf einem Transportband oder dergleichen abgelegt, mit dem der Kunststoffbecherstapel zum Verpacken weitertransportiert wird.

Je nach Zahl der Spritzgußformen und Entnahmeeinheiten 25 ist eine entsprechende Zahl von Ablegeeinheiten 30 und Aufnahmen 31 vorgesehen. Mit der Spritzgußmaschine können somit mehrere Kunststoffbecherstapel in der Zeiteinheit gebildet werden. Bei der Ausführungsform gemäß den Fig. 3 bis 6 ist zwischen der Entnahmeeinheit 25 und der Ablegeeinheit 30 eine Lineareinheit 38, 39 zwischengeschaltet. Sie haben Saughalter 40, 41, mit denen die Kunststoffbecher 24 von den Entnahmeeinheiten 25 übernommen und die Etiketten 12 in die Eingabeeinheiten 3 eingelegt werden können. Hierzu werden die Kunststoffbecher 24 von den Saughaltern 29 der Entnahmeeinheiten 25 abgeblasen und von den Saughaltern 40 angesaugt. Anschließend werden die Lineareinheiten 38, 39 in Richtung der in Fig. 3 eingezeichneten Bewegungspfeile verfahren, bis die Saughalter 40 im Übergabebereich der Ablegeeinheiten 30 liegen. Hier werden die Kunststoffbecher 24 in der beschriebenen Weise von den Ablegeeinheiten 30 aufgenommen und in die Aufnahmen 31 gesteckt.

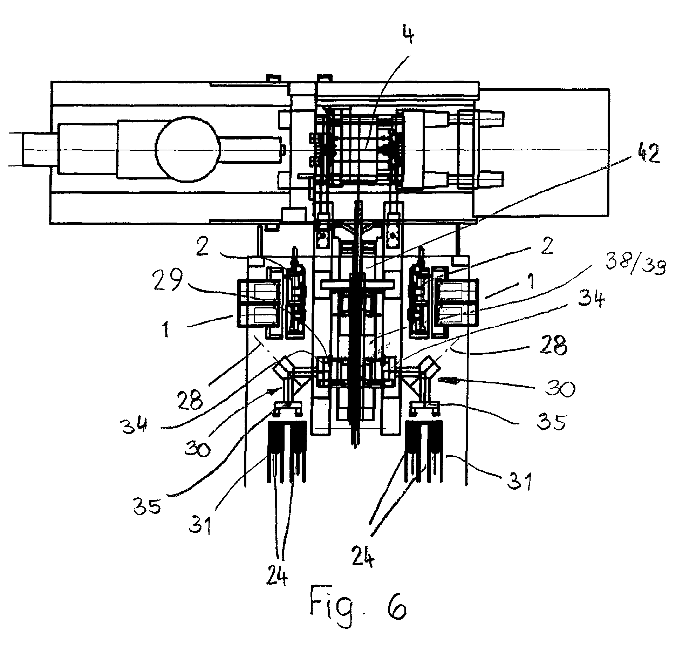

Bei dieser Ausführungsform befinden sich die Magazine 1 für die Etiketten beiderseits der Lineareinheiten 38, 39. Zwischen ihnen und den Magazinen 1 sind die Übergabeeinheiten 2 angeordnet (Fig. 6), mit denen die Etiketten dem jeweiligen Magazin 1 entnommen und den entsprechenden Saughaltern 41 der Lineareinheiten 38, 39 übergeben werden. Wie sich aus Fig. 3 ergibt, werden mit den Saughaltern 40, 41 bei geschlossener Spritzgußform 4 gleichzeitig die Etiketten 12 an die Eingabeeinheiten 3 übergeben und die Kunststoffbecher 24 von den Entnahmeeinheiten 25 abgenommen. Die Etiketten 12 werden wie bei der Spritzgußmaschine gemäß den Fig. 1 und 2 durch Saugluft auf den Saughalter 41 becherförmig aufgewickelt.

Wie Fig. 6 zeigt, befindet sich in Verfahrrichtung auf beiden Seiten der Lineareinheiten 38, 39 Saughalter 40, 41. Die Lineareinheiten 38, 39 werden in die in Fig. 6 dargestellte Übergabestellung verfahren, in der die auf den Saughaltern durch Unterdruck gehaltenen Kunststoffbecher 24 von den Ablegeeinheiten 30 übernommen werden. Die Saughalter 34, 35 der Ablegeeinheiten 30 sind so ausgebildet, daß sie gleichzeitig zwei Kunststoffbecher 24 von den Lineareinheiten aufnehmen können. Die auf den Saughaltern der Lineareinheiten 38, 39 sitzenden Kunststoffbecher 24 werden zur Übergabe an die Ablegeeinheiten 30 abgeblasen und mittels Unterdruck auf den Saughaltern 34 bzw. 35 gehalten. Anschließend werden die Ablegeeinheiten 30 um die Achse 28 um 180° gedreht, so daß die Kunststoffbecher 24 auf den Saughaltern 34, 35 den Aufnahmen 31 gegenüberliegen. Die Saughalter 34, 35 werden ausgefahren, um die Kunststoffbecher 24 in die Aufnahmen 31 zu schieben. Gleichzeitig werden mit den Saughaltern des jeweils anderen Arms der Ablegeeinheiten 30 die nächsten Kunststoffbecher von den Entnahmeeinheiten 25 in der beschriebenen Weise abgenommen. Durch jeweiliges Schwenken der Ablegeeinheiten 30 um die schräg liegenden Achsen 28 werden die Kunststoffbecher 24 innerhalb kürzester Zeit in den Aufnahmen 31 gestapelt.

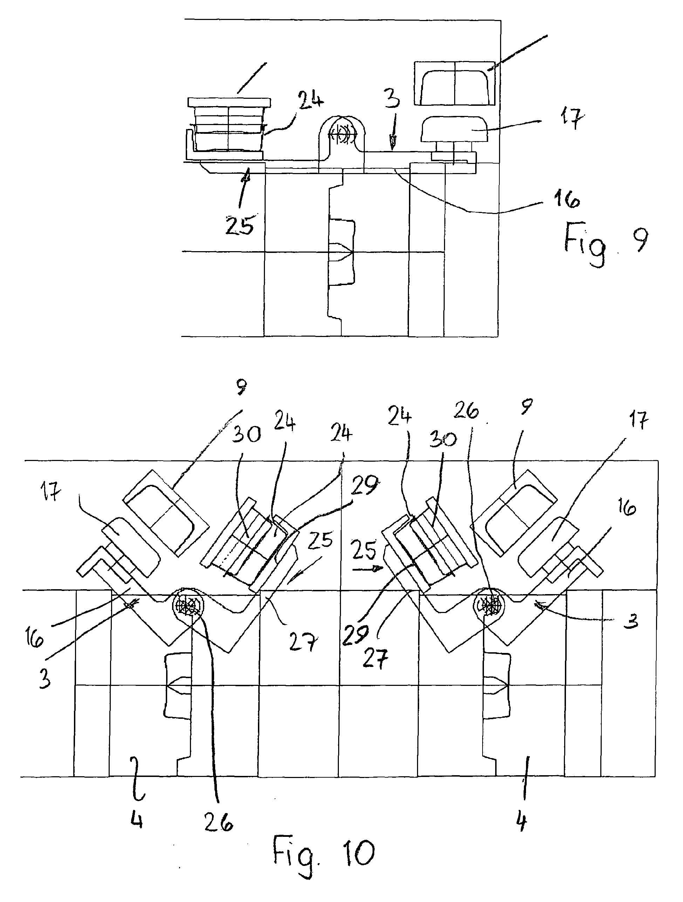

Wie Fig. 10 zeigt, können die Eingabeeinheit 3 und die Entnahmeeinheit 25 in der Ausgangsstellung auch unter einem Winkel von etwa 90° zueinander angeordnet sein. Die Eingabeeinheiten 3 haben den am freien Ende des Arms 16 vorgesehenen Aufnahmekopf 17, der das in die Spritzgußform 4 einzulegende Etikett in der beschriebenen Weise aufnimmt. Es wird mittels des Aufnahmeteiles 9 der Übergabeeinheit 2 übergeben. Die Entnahmeeinheiten 25 haben entsprechend der Ausführungsform nach den Fig. 3 bis 5 und 9 den von der Drehachse 26 quer abstehenden Arm 27, der am freien Ende mit dem Saughalter 29 zur Entnahme des fertigen Kunststoffbechers 24 aufweist. Er wird der Ablegeeinheit 30 in der beschriebenen Weise übergeben, die in Fig. 10 nur teilweise dargestellt ist.

Die Spritzgußmaschine hat eine hohe Leistung, da mittels des Ständers 5 und den auf beiden Seiten vorgesehenen Übergabeeinheiten 2 das Abziehen der Etiketten 12 aus dem Magazin 1 und das Übergeben an die Eingabeeinheiten 3 zeitgleich erfolgt. Die Übergabeeinheiten 2 bzw. ihre Aufnahmeteile 9 müssen nur einen kurzen Hub ausführen, um die Etiketten 12 den Aufnahmeköpfen 17 der Eingabeeinheiten 3 zu übergeben. Die Etikettenübergabe erfolgt somit sehr rasch. Die Aufnahmeköpfe 17 der Eingabeeinheiten 3 sind über ihren Umfang mit (nicht dargestellten) Schlitzen versehen, über welche die Saugluft auf die Etiketten 12 wirken kann. Durch Anlegen des Unterdruckes werden die Etiketten 12 somit selbsttätig in Becherform auf die Aufnahmeköpfe 17 aufgewickelt.

Sind die Entnahmeeinheiten 25 entsprechend den Fig. 1, 2, 7 und 8 ausgebildet, dann ergibt sich eine sehr einfache und rasche Übergabe der spritzgegossenen Kunststoffbecher 24 an die Ablegeeinheiten 30. Hat die Spritzgußmaschine mehrere Spritzgußformen, beispielsweise 4 oder 6, dann ist eine entsprechende Zahl von Magazinen 1, Übergabeeinheiten 2, Eingabeeinheiten 3, Entnahmeeinheiten 25 und Ablegeeinheiten 30 sowie Aufnahmen 31 vorgesehen. Die Werkzeugteile 20, 22 sind auswechselbar vorgesehen, so daß ein Formatwechsel des Kunststoffbechers einfach und rasch vorgenommen werden kann. Mittels der Ablegeeinheiten 30 werden die Kunststoffbecher 24 zuverlässig in die Aufnahmen 31 gesteckt, so daß sie störungsfrei in den Aufnahmen 31 gestapelt werden können. Werden mehrere Kunststoffbecher 24 gleichzeitig übergeben und in die Aufnahmen 31 gesteckt, kann in der Zeiteinheit eine sehr große Zahl von Kunststoffbechern gefertigt werden. Die Spritzgußmaschine ist dabei sehr kompakt ausgebildet, so daß sie auch bei beengten Raumverhältnissen aufgestellt werden kann. Die beschriebenen Bewegungen der einzelnen Einheiten der Spritzgußmaschine sind ohne Kurvenantrieb nur über Servomotoren bzw. eine Bahnsteuerung möglich. Die beschriebene Wickeltechnologie, das heißt das Aufwickeln der Etiketten 12 auf die Aufnahmeköpfe 17 unter Anwendung von Unterdruck, eignet sich auch für das Tiefziehen von Kunststoffbechern. Die Einlagerung der Kunststoffbecher 24 in die Aufnahmen 31 erfolgt parallel zum Spritzgießen der nächsten Kunststoffbecher 24, so daß das gezielte Stapeln der Kunststoffbecher 24 und das Spritzgießen neuer Kunststoffbecher zeitgleich erfolgt. Bei einer Ausbildung der Spritzgußmaschine entsprechend den Fig. 1, 2 und 7 bis 9 ergeben sich sehr kurze Zykluszeiten. Zum Einlegen der Etiketten und der im wesentlichen zeitgleichen Entnahme der Kunststoffbecher 24 muß die Spritzgußform nur sehr kurze Zeit geöffnet sein. Die Öffnungszeit der Spritzgußform liegt in der Größenordnung von etwa 0,2 bis 0,4 Sekunden. Diese Form-Offen-Zeit ist damit wesentlich geringer als bei Spritzgußmaschinen mit einem Linearsystem, bei dem die Eingabeeinheiten 3 bzw. die Entnahmeeinheiten 25 nicht durch eine Schwenkbewegung, sondern durch eine Linearbewegung in die geöffnete Spritzgußform 4 gefahren werden.

Die Spritzgußformen 4 können waagrecht, vertikal oder auch schräg in der Spritzgußmaschine angeordnet sein. Dementsprechend haben auch die anderen Einheiten der Maschine entsprechend angepaßte Lagen.

## Patentansprüche

1. Spritzgußmaschine zur Herstellung von Kunststoff-Formteilen, vorzugsweise von Kunststoffbechern, mit wenigstens einer Spritzgußform und wenigstens einer Entnahmeeinheit, mit der die Kunststoff-Formteile der Spritzgußform entnehmbar sind,
**dadurch gekennzeichnet, daß** die Kunststoff-Formteile (24) bei geschlossener Spritzgußform (4) geführt abgelegt werden.

2. Spritzgußmaschine nach Anspruch 1,
**dadurch gekennzeichnet, daß** die Entnahmeeinheit (25) das Kunststoff-Formteil (24) an wenigstens eine Ablegeeinheit (30) übergibt, die vorteilhaft das Kunststoff-Formteil (24) in wenigstens einer Aufnahme (31) ablegt.

3. Spritzgußmaschine nach Anspruch 2,
**dadurch gekennzeichnet, daß** die Ablegeeinheit (30) zwei winklig vorzugsweise rechtwinklig zueinander liegende Arme (32, 33) aufweist, die Saughalter (34, 35) für die Kunststoff-Formteile (24) aufweisen.

4. Spritzgußmaschine nach Anspruch 2 oder 3,
**dadurch gekennzeichnet, daß** die Ablegeeinheit (30) um eine Achse (36) schwenkbar ist, die vorteilhaft unter 45° zu den Armen (32, 33) der Ablegeeinheit (30) liegt.

5. Spritzgußmaschine nach einem der Ansprüche 1 bis 4,
**dadurch gekennzeichnet, daß** die Entnahmeeinheit (25) um eine Achse (26) drehbar ist.

6. Spritzgußmaschine nach einem der Ansprüche 1 bis 5,
**dadurch gekennzeichnet, daß** die Entnahmeeinheit (25) eine weitere, vorzugsweise parallel zur Drehachse (26) der Entnahmeeinheit (25) liegende Drehachse (28) aufweist, an der drehfest wenigstens ein Saughalter (29) für das Kunststoff-Formteil (24) vorgesehen ist.

7. Spritzgußmaschine nach Anspruch 6,
**dadurch gekennzeichnet, daß** die weitere Drehachse (28) bei der Schwenkbewegung der Entnahmeeinheit (25) gegensinnig zur Drehachse (26) der Entnahmeeinheit (25) antreibbar ist.

8. Spritzgußmaschine nach einem der Ansprüche 1 bis 7,
**dadurch gekennzeichnet, daß** wenigstens eine Eingabeeinheit (3) vorgesehen ist, mit der vorteilhaft Etiketten (12) in die geöffnete Spritzgußform (4) einlegbar sind.

9. Spritzgußmaschine nach Anspruch 8,
**dadurch gekennzeichnet, daß** die Eingabeeinheit (3) eine vorteilhaft parallel zur Drehachse (26) der Entnahmeeinheit (25) liegende Schwenkachse (15) aufweist.

10. Spritzgußmaschine nach Anspruch 8 oder 9,
**dadurch gekennzeichnet, daß** die Eingabeeinheit (3) und die Entnahmeeinheit (25) auf einander gegenüberliegenden Seiten der Spritzgußform (4) angeordnet sind.

11. Spritzgußmaschine nach einem der Ansprüche 8 bis 10,
**dadurch gekennzeichnet, daß** die Eingabeeinheit (3) annähernd zeitgleich zur Entnahme des Kunststoff-Formteiles (24) das Etikett (12) in die geöffnete Spritzgußform (4) einlegt.

12. Spritzgußmaschine nach einem der Ansprüche 8 bis 11,
**dadurch gekennzeichnet, daß** die Eingabeeinheit (3) die Etiketten (12) von wenigstens einer vorzugsweise an einem Ständer (5) vorgesehenen Übergabeeinheit (2) übernimmt, der vorteilhaft an zwei einander gegenüberliegenden Seiten jeweils wenigstens eine Übergabeeinheit (2) aufweist.

13. Spritzgußmaschine nach Anspruch 12,
**dadurch gekennzeichnet, daß** die eine Übergabeeinheit (2) das Etikett (12) an die Eingabeeinheit (3) übergibt und die andere Übergabeeinheit (2) gleichzeitig ein Etikett (12) mindestens einem Magazin (1) entnimmt.

14. Spritzgußmaschine nach einem der Ansprüche 1 bis 4, 8, 9 und 10 bis 13,
**dadurch gekennzeichnet, daß** die Entnahmeeinheit (25) das Kunststoff-Formteil (24) an eine Lineareinheit (38, 39) übergibt.

15. Spritzgußmaschine nach Anspruch 14,
**dadurch gekennzeichnet, daß** die Entnahmeeinheit (25) das Kunststoff-Formteil (24) bei geschlossener Spritzgußform (4) an die Lineareinheit (38, 39) übergibt, die vorteilhaft wenigstens zwei Saughalter (40, 41) aufweist.

16. Spritzgußmaschine nach einem der Ansprüche 1 bis 15,
**dadurch gekennzeichnet, daß** die die Matrize (21) und die Patrize (23) aufweisenden Werkzeugteile (20, 22) der Spritzgußform (4) auswechselbar sind.

17. Spritzgußmaschine nach einem der Ansprüche 8 bis 16,
**dadurch gekennzeichnet, daß** die Eingabeeinheit (3) einen Aufnahmekopf (17) aufweist, an dem das Etikett (12) mittels Saugkraft gehalten wird, und daß vorzugsweise an den Seitenwänden (19) und an der Stirnseite (18) des Aufnahmekopfes (17) Saugöffnungen vorgesehen sind, über die Saugluft auf das Etikett (12) wirkt.

18. Spritzgußmaschine nach Anspruch 17,
**dadurch gekennzeichnet, daß** das Etikett (12) durch Anwendung von Saugkraft selbsttätig auf den Aufnahmekopf (7) becherförmig aufwikkelbar ist.

19. Spritzgußmaschine nach einem der Ansprüche 14 bis 18,
**dadurch gekennzeichnet, daß** die Lineareinheit (38, 39) das Etikett (12) bei geschlossener Spritzgußform (4) an die Eingabeeinheit (3) übergibt.
